# EUROPEAN PATENT SPECIFICATION

(11) **EP 2 711 517 B1**
(45) Date of publication and mention of the grant of the patent: **29.07.2015**
(21) Application number: 13181995.5
(22) Date of filing: 28.08.2013
(51) Int. Cl.: F01N 3/08, F01N 13/02

(54) **Exhaust emission purification apparatus for internal combustion engine**
Abgasreinigungsvorrichtung für Verbrennungsmotor
Système de purification d'émission d'échappement pour moteur à combustion interne

(30) Priority: 30.08.2012 JP 2012189435; 26.07.2013 JP 2013155826
(43) Date of publication of application: 26.03.2014
(73) Proprietor: Kabushiki Kaisha Toyota Chuo Kenkyusho, Aichi-ken 480-1192 (JP)
(72) Inventor: Shichi, Akira, Nagakute-shi, Aichi-ken 480-1192 (JP); Kizaki, Yoshimi, Nagakute-shi, Aichi-ken, 480-1192 (JP)
(74) Representative: Kramer Barske Schmidtchen Patentanwälte PartG mbB

(56) References cited:
- JP-A- H11 227 087
- US-A1- 2010 313 552

## Description

### TECHNICAL FIELD

The present invention relates to an exhaust emission purification apparatus for an internal combustion engine, which serves to eliminate nitrogen oxides from within an exhaust gas of the internal combustion engine.

### BACKGROUND ART

Technologies disclosed in the patent publications mentioned below are publicly known as technologies for eliminating nitrogen oxides (NOx) from within an exhaust gas. A technique according to JP 2011-230120 A includes a step of causing a gas flow to contact an oxidation catalyst so as to oxidize a considerable part of NO gas present in the gas flow and thereby generating higher-order NxOy molecules, and a step of subsequently removing the higher-order NxOy molecules from the gas flow by solvent absorption (aqueous absorption) or solvent reaction (aqueous reaction). With these steps, the technique attempts to reduce NOx emission from the gas flow.

A technique according to JP 2006-255702 A includes a dry process wherein atmospheric-pressure low-temperature non-equilibrium plasma is generated in an exhaust gas by setting an applied voltage using, as a reference value, a value at which NO within the exhaust gas becomes oxidized and the level of NO₂ becomes maximum. The technique further includes a wet process wherein the exhaust gas, in which NO has been efficiently oxidized into NO₂ by the low-temperature non-equilibrium plasma, is caused to react with a reductant solution containing sodium sulfite (Na₂SO₃), sodium sulfide (Na₂S), or the like. With these processes, the technique attempts to remove nitrogen oxides from within the exhaust gas.

According to a technique disclosed in JP 2000-288340 A, an engine exhaust system is provided with a gas oxidation unit which causes NOx and SOx contained in an exhaust gas and having a low degree of oxidation to contact ozone so as to be oxidized into gas-phase NO₂ and SO₃, a hydration unit which causes NO₂ and SO₃ to contact water vapor so as to generate gas-phase nitric acid and sulfuric acid, and an acid immobilization unit filled with an acid immobilizer, which is composed of a concrete sludge and/or concrete particles for immobilizing these acids and is formed into particulate form using cement as a binder. With this configuration, the technique attempts to remove NOx and SOx from within an exhaust gas of an engine.

According to JP 2011-230120 A, NO within an exhaust gas is oxidized to generate higher-order NxOy (such as NO₂ and N₂O₅), and NO₂ and N₂O₅ are removed by aqueous absorption or aqueous reaction. However, as NO₂ and N₂O₅ have low absorption rate and low reaction rate with respect to water, high elimination ratio cannot be attained.

According to JP 2006-255702 A, atmospheric-pressure, low-temperature, non-equilibrium plasma is generated in an exhaust gas so as to oxidize NO into NO₂, and NO₂ is caused to react with a solution of a reductant such as Na₂SO₃ and Na₂S so as to be reduced into nitrogen (N₂). However, when nitric acid (HNO₃) is generated as a by-product in the process of oxidizing NO into NO₂, reduction of NO₂ into N₂ through reaction with a reductant solution is hindered. For this reason, in JP 2006-255702 A, during the generation of the low-temperature non-equilibrium plasma, the applied voltage is controlled such that the level of NO₂ becomes maximum, so as to suppress by-production of HNO₃. However, as NO₂ has low reaction rate with respect to a reductant solution containing Na₂SO₃, Na₂S, or the like, high elimination ratio cannot be attained.

Further, according to JP 2000-288340 A, NO within an exhaust gas is oxidized with ozone (O₃) into NO₂, and NO₂ is caused to contact with water vapor (H₂O) so as to generate gas-phase nitric acid (HNO₃). This nitric acid is removed by means of an acid immobilizer. However, by simply mixing NO, O₃, and H₂O in gas phase, it is not possible to attain high elimination ratio, because the rate of nitric acid generation is low.

US 2010/0313552 A1 relates to an exhaust emission control apparatus for an internal combustion engine.

An advantage of the present invention is to provide an exhaust emission purification apparatus for an internal combustion engine, which is capable of improving the ratio of elimination of nitrogen oxides from within an exhaust gas of the internal combustion engine.

### SUMMARY

The present invention provides an exhaust emission purification apparatus for an internal combustion engine, which serves to eliminate nitrogen oxide from within an exhaust gas of the internal combustion engine. The apparatus comprises: a reformer device that includes a nitric acid generating catalyst for promoting a reaction to convert nitrogen oxide into nitric acid, and causes nitrogen oxide contained in the exhaust gas from the internal combustion engine to be reformed into nitric acid on the nitric acid generating catalyst; an absorption device that causes the nitric acid obtained by the reformation in the reformer device to be absorbed into an absorption liquid and thereby separates and removes the nitric acid; and a temperature adjustment device for maintaining a temperature of the nitric acid generating catalyst at 350°C or lower.

According to an aspect of the present invention, the temperature adjustment device is preferably a device for maintaining the temperature of the nitric acid generating catalyst at 300°C or lower.

According to an aspect of the present invention, an oxidation catalyzing device is preferably provided at a position upstream of the reformer device, the oxidation catalyzing device causing nitrogen monoxide contained in the exhaust gas from the internal combustion engine to be oxidized into nitrogen dioxide, and causing hydrocarbon contained in the exhaust gas to be oxidized into water and carbon dioxide.

According to an aspect of the present invention, the nitric acid generating catalyst preferably contains a zeolite or oxide.

According to an aspect of the present invention, the nitric acid generating catalyst preferably contains a zeolite or oxide with an acidic site having a heat of ammonia adsorption of 110 kJ/mol or higher.

According to an aspect of the present invention, the nitric acid generating catalyst preferably contains a zeolite with pores having a diameter of 0.8 nm or smaller.

According to an aspect of the present invention, the nitric acid generating catalyst preferably contains a CHA-type, MFI-type, BEA-type, or MOR-type zeolite.

According to an aspect of the present invention, the nitric acid generating catalyst preferably contains a metal or metal ion of at least one of Ag, Fe, and Cu.

According to an aspect of the present invention, the reformer device preferably reforms nitrogen oxide contained in the exhaust gas into nitric acid by adding an oxidant to the exhaust gas from the internal combustion engine.

According to an aspect of the present invention, the oxidant is preferably ozone.

According to an aspect of the present invention, the absorption device preferably includes a gas-liquid contact device that causes the nitric acid obtained by the reformation in the reformer device to come into contact with and be absorbed into the absorption liquid via a porous membrane.

According to the present invention, by maintaining the temperature of the nitric acid generating catalyst for promoting the reaction to convert nitrogen oxide into nitric acid at 350°C or lower, nitrogen oxide contained in the exhaust gas from the internal combustion engine can be reformed into nitric acid on the nitric acid generating catalyst continuously at a high reformation rate. Further, by causing the nitric acid obtained by the reformation on the nitric acid generating catalyst to be absorbed into an absorption liquid, absorption rate can be increased, and thereby the ratio of nitrogen oxide elimination can be enhanced.

### BRIEF DESCRIPTION OF THE DRAWINGS

Preferred embodiments of the present invention will be described in detail by reference to the following figures, wherein:
FIG. 1 is a diagram showing a schematic configuration of an exhaust emission purification apparatus for internal combustion engine according to an embodiment of the present invention;
FIG. 2 is a diagram showing a schematic configuration of an experimental apparatus for determining a ratio of nitrogen oxide elimination;
FIG. 3 is a graph showing nitrogen oxide elimination ratios measured using the experimental apparatus of FIG. 2;
FIG. 4 is a graph showing nitrogen oxide elimination ratios measured using the experimental apparatus of FIG. 2;
FIG. 5 is a graph showing nitrogen oxide elimination ratios measured using the experimental apparatus of FIG. 2;
FIG. 6 is a graph showing nitrogen oxide elimination ratios measured using the experimental apparatus of FIG. 2;
FIG. 7 is a graph showing a relationship of nitrogen oxide elimination ratio with respect to heat of ammonia adsorption.
FIG. 8 is a graph showing a relationship of nitrogen oxide elimination ratio with respect to zeolite pore diameter.
FIG. 9 is a graph showing a relationship of NOx absorption ratio with respect to O₃/NO concentration ratio at an inlet of a reformer device;
FIG. 10 is a graph showing a relationship of NOx absorption ratio with respect to O₃/NO₂ concentration ratio at an inlet of a reformer device;
FIG. 11 is a graph showing relationships of NOx absorption ratio and O₃ conversion ratio with respect to C₃H₆ concentration at an inlet of a reformer device;
FIG. 12 is a graph showing a relationship of NOx absorption ratio with respect to O₃ concentration at an inlet of a reformer device;
FIG. 13 is a diagram showing another schematic configuration of an exhaust emission purification apparatus for an internal combustion engine according to an embodiment of the present invention; and
FIG. 14 is a graph showing temperature dependence of conversion ratio of C₃H₆ and CO into CO₂ and conversion ratio of NO into NO₂ on an oxidation catalyst.

### DESCRIPTION OF EMBODIMENTS

Embodiments for practicing the present invention are described below with reference to the drawings.

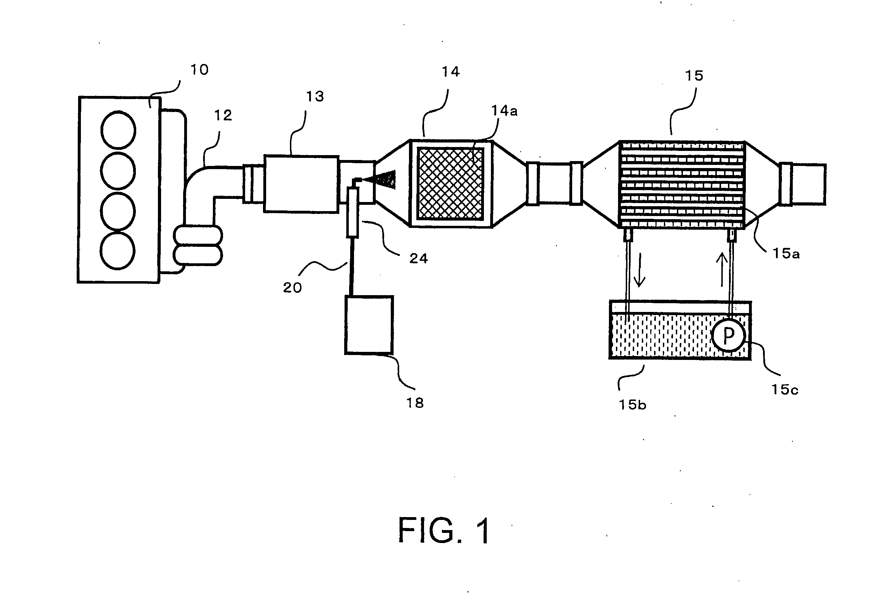

FIG. 1 is a diagram showing a schematic configuration of an exhaust emission purification apparatus for an internal combustion engine according to an embodiment of the present invention. An internal combustion engine 10 generates motive power by burning a fuel inside a cylinder. The internal combustion engine 10 may be a spark ignition engine such as a gasoline engine, or a compression ignition engine such as a diesel engine. The exhaust gas obtained after the burning in the internal combustion engine 10 is discharged into an exhaust manifold 12. The exhaust gas discharged into the exhaust manifold 12 contains harmful components such as nitrogen oxide (NOx). In the present embodiment, in order to eliminate the harmful components, including nitrogen oxide, from within the exhaust gas of the internal combustion engine 10, an absorption device 15 is provided in the exhaust manifold 12. Further, a reformer device 14 is provided at a position upstream of the absorption device 15 in the exhaust manifold 12, and a heat exchanger 13 is provided at a position upstream of the reformer device 14 in the exhaust manifold 12.

The reformer device 14 comprises a nitric acid generation catalyst 14a for promoting a reaction to convert nitrogen oxide into nitric acid (HNO₃), and, on the nitric acid generation catalyst 14a, nitrogen oxide constituting the harmful components within the exhaust gas of the internal combustion engine 10 is reformed into nitric acid. The nitric acid generation catalyst 14a may be composed of a catalyst having an acidic site, or a catalyst formed with a carrier having an acidic site and carrying thereon a metal such as silver (Ag), iron (Fe), or copper (Cu). As the catalyst/carrier having an acidic site, it is possible to use, for example, a zeolite such as ZSM-5, BEA, MOR, or SAPO, SiO₂/Al₂O₃, SO₄/TiO₂, and other composite oxides such as SiO₂/TiO₂, WO₃/TiO₂, WO₃/ZrO₂, WO₃/SnO₂, or SO₄/ZrO₂. To enable oxidation reaction in the reformer device 14, an ozone adding valve 24 is provided at a position upstream of the reformer device 14 in the exhaust manifold 12 (at a position between the heat exchanger 13 and the reformer device 14). By injecting ozone (O₃), which serves as an oxidant, from the ozone adding valve 24 to the reformer device 14, ozone is added to the harmful components within the exhaust gas flowing into the reformer device 14. In the reformer device 14, nitrogen oxides such as nitrogen monoxide (NO) and nitrogen dioxide (NO₂) contact the nitric acid generation catalyst 14a, together with ozone (O₃) added by the ozone adding valve 24 and moisture contained in the exhaust gas of the internal combustion engine 10 (normally, an engine exhaust gas includes moisture at approximately 7%). As a result, the nitrogen oxides are oxidized and reformed into nitric acid (HNO₃). The exhaust gas containing the harmful components converted into nitric acid is supplied to the absorption device 15 located downstream.

In order to generate ozone to be added to the harmful components flowing into the reformer device 14, an ozone generation device 18 is provided. Ozone generated in the ozone generation device 18 is supplied through an ozone delivery pipe 20 and injected from the ozone adding valve 24 to the reformer device 14. While ozone can be produced by any method in the ozone generation device 18, example methods include a method using a hydroelectrolysis device and a method using plasma discharge. Among others, use of a hydroelectrolysis device enables generation and supply of high-concentration and high-purity ozone, and is also advantageous in terms of efficiency, costs, space, and the like. A hydroelectrolysis device is a device that generates ozone and hydrogen by electrolysis of water. Water is decomposed and ozone is generated on the cathode side isolated by a cation exchange membrane, while hydrogen is generated on the anode side from hydrogen ions that have passed through the cation exchange membrane. Water used for electrolysis in the hydroelectrolysis device can be supplied from the outside, or can be supplied by collecting water within the exhaust gas.

The heat exchanger 13 provided on the upstream of the reformer device 14 carries out heat exchange with the exhaust gas from the internal combustion engine 10, and thereby adjusts the temperature of the exhaust gas flowing into the reformer device 14. As a result, the temperature of the nitric acid generation catalyst 14a that contacts the exhaust gas is adjusted. For example, by supplying a coolant to the heat exchanger 13 and cooling the exhaust gas from the internal combustion engine 10, the temperature of the exhaust gas flowing into the reformer device 14 can be lowered, and in turn the temperature of the nitric acid generation catalyst 14a can be lowered. In this way, the heat exchanger 13 functions as a temperature adjustment device for adjusting the temperature of the nitric acid generation catalyst 14a.

The absorption device 15 provided on the downstream of the reformer device 14 causes nitric acid obtained by the reformation in the reformer device 14 to be absorbed into an absorption liquid so as to be separated and removed from the exhaust gas. While the absorption device 15 may be of any type so long as nitric acid can be absorbed into an absorption liquid, a membrane-type gas-liquid contact device 15a can be used, for example. In a membrane-type gas-liquid contact device 15a, the exhaust gas passage and the absorption liquid are isolated from each other by a porous membrane, and nitric acid contained in the exhaust gas is caused to contact the absorption liquid from the exhaust gas passage through the porous membrane so as to be absorbed. As the porous membrane, it is possible to use a membrane such as a porous PTFE (polytetrafluoroethylene) membrane as disclosed in JP 5-23553 A and JP 11-227087 A. As the absorption liquid for absorbing nitric acid, water may be used, for example. The water may have dissolved therein an alkali salt such as potassium carbonate or sodium carbonate, an alcohol, or the like. The absorption liquid mainly composed of water is stored in an absorption liquid tank 15b, and supplied into the membrane-type gas-liquid contact device 15a by being pumped by a pump 15c. The absorption liquid into which nitric acid has been absorbed in the membrane-type gas-liquid contact device 15a is returned to the absorption liquid tank 15b and circulated. Nitric acid absorbed into the absorption liquid may be disposed by periodically changing the absorption liquid, or may be subjected to decomposition processing by electrolysis or the like.

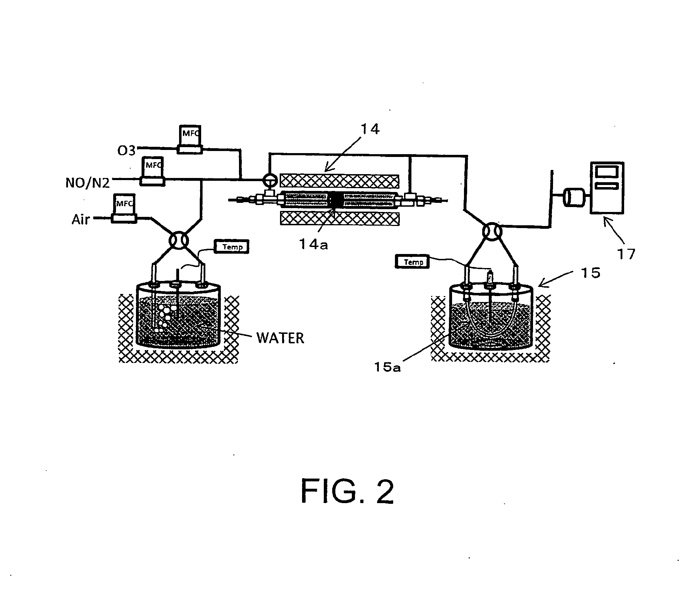

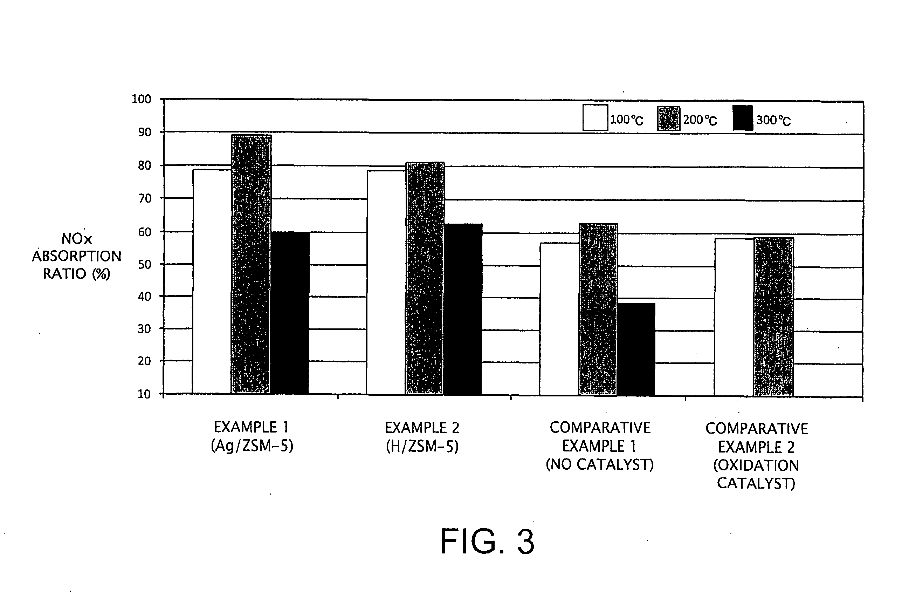

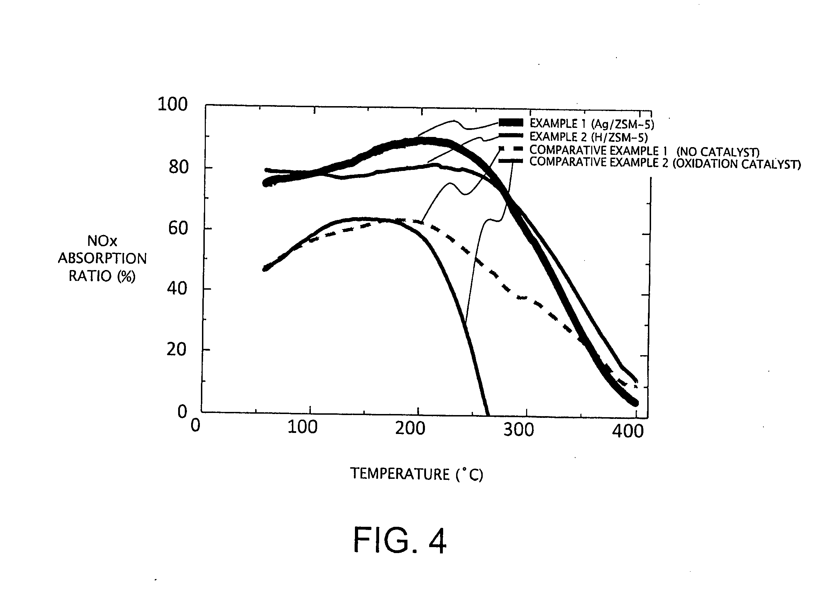

In order to determine a ratio of elimination (ratio of absorption) of nitrogen oxides in the exhaust emission purification apparatus according to the embodiment, an experimental apparatus as shown in FIG. 2 was constructed, and an experiment was conducted to measure changes in concentration of nitrogen oxides between before and after passage through the reformer device 14 and the absorption device 15. The experiment conditions were as follows. Nitric acid generation catalyst 14a (in 0.3∼1 mm pellet form) was used in an amount of 0.5 g. Gas flowing into the reformer device 14 contained 100 ppm NO, 200 ppm O₃, and 3% H₂O, and had the total flow rate of 5 L/min. The absorption device 15 included 300 ml of absorption water at 20°C and one porous PTFE tube having the size of 4 mm x 3 mm x 125 mm. Further, during the experiment, the temperature of the nitric acid generation catalyst 14a was altered within a range from 50°C to 400°C, so as to additionally determine the effect of temperature changes of the nitric acid generation catalyst 14a on the ratio of elimination of nitrogen oxides. As the experiment results, nitrogen oxide elimination ratios (NOx absorption ratios) measured by a gas analyzer 17 are shown in FIGs. 3 and 4. An NOx absorption ratio (%) is given by (NOx concentration at the outlet of the absorption device 15) / (NOx concentration at the inlet of the absorption device 15) x 100. In the gas analyzer 17, HNO₃ gas was analyzed as an NOx value by causing HNO₃ gas to be passed through an oxidation catalyst and thereby be decomposed in advance into NO and NO₂. Referring to FIG. 3, in Example 1 (Ag/ZSM-5), Ag/ZSM-5 was used as the nitric acid generation catalyst 14a, wherein the Ag/ZSM-5 was obtained by a process in which NH₄-ZSM-5 zeolite was subjected to ion exchange processing in a silver nitrate aqueous solution, then filtered, washed, calcined in air at 500°C, and subsequently formed to have a size in a range from 0.3 to 1 mm. In Example 2 (H/ZSM-5), H/ZSM-5 was used as the nitric acid generation catalyst 14a, wherein the H/ZSM-5 was obtained by a process in which NH₄-ZSM-5 zeolite was calcined in air at 500 °C and subsequently formed to have a size in a range from 0.3 to 1 mm. Further, in Comparative Example 1 (no catalyst), the nitric acid generation catalyst 14a was omitted. In Comparative Example 2 (oxidation catalyst), PtPd/Al₂O₃, which is a typical diesel oxidation catalyst, was used as the nitric acid generation catalyst 14a.

As shown in FIGs. 3 and 4, Examples 1 and 2 achieve increased NOx absorption ratio compared to Comparative Examples 1 and 2, and specifically achieve higher NOx absorption ratio compared to Comparative Examples 1 and 2 when the nitric acid generation catalyst 14a is in a temperature range of 350°C and below. Accordingly, in the present embodiment, the heat exchanger 13 adjusts the temperature of the nitric acid generation catalyst 14a by performing heat exchange with the exhaust gas of the internal combustion engine 10 so as to maintain the temperature of the nitric acid generation catalyst 14a at or below 350°C. For example, when the temperature of the nitric acid generation catalyst 14a as detected by a temperature sensor exceeds 350°C, a coolant is supplied to the heat exchanger 13 so as to lower the temperature of the exhaust gas that contacts the nitric acid generation catalyst 14a, and thereby the temperature of the nitric acid generation catalyst 14a is lowered to 350°C or lower.

In Examples 1 and 2, while a high NOx absorption ratio of approximately 80% can be attained when the temperature of the nitric acid generation catalyst 14a is in a range of 300°C and below, NOx absorption ratio lowers when the temperature of the nitric acid generation catalyst 14a exceeds 300°C. Accordingly, in the present embodiment, the heat exchanger 13 preferably adjusts the temperature of the nitric acid generation catalyst 14a by performing heat exchange with the exhaust gas of the internal combustion engine 10 so as to maintain the temperature of the nitric acid generation catalyst 14a at or below 300°C. For example, when the temperature of the nitric acid generation catalyst 14a as detected by a temperature sensor exceeds 300°C, a coolant is preferably supplied to the heat exchanger 13 so as to lower the temperature of the exhaust gas that contacts the nitric acid generation catalyst 14a, to thereby lower the temperature of the nitric acid generation catalyst 14a to 300°C or lower. Here, NOx absorption ratio decreases along with an increase in the temperature of the nitric acid generation catalyst 14a as shown in FIGs. 3 and 4, because ozone used for the generation of nitric acid becomes decomposed under high temperatures, and also because the generated nitric acid reconverts into nitrogen oxide by reverse reaction under high temperatures.

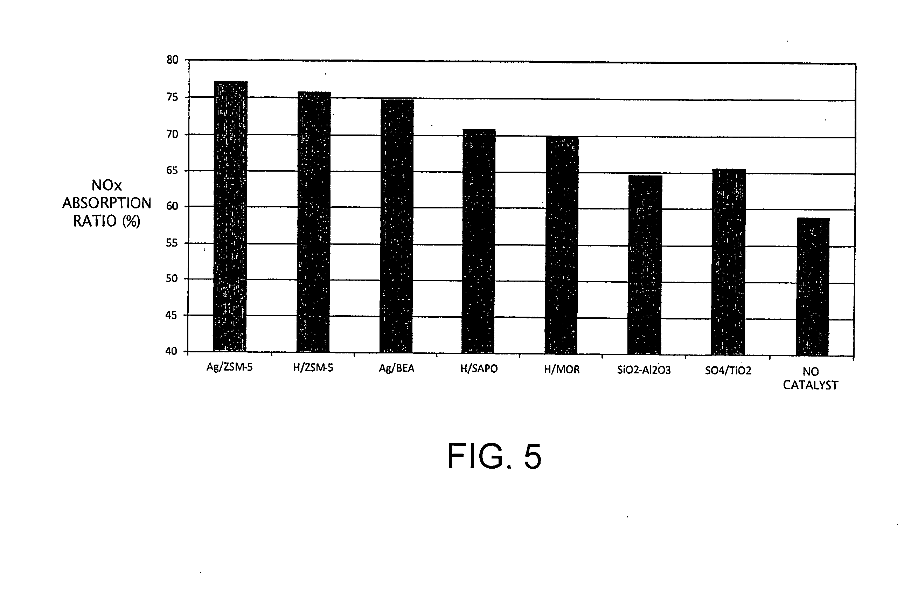

It is also noted that Example 1 (Ag/ZSM-5) attains higher NOx absorption ratio compared to Example 2 (H/ZSM-5) when the temperature of the nitric acid generation catalyst 14a is in a range from 100°C to 250°C. Further, FIG. 5 shows nitrogen oxide elimination ratios (NOx absorption ratios) measured by the gas analyzer 17 as the experimental results obtained in cases of using zeolites Ag/BEA, H/SAPO, and H/MOR, and composite oxides SiO₂/Al₂O₃ and SO₄/TiO₂ as the nitric acid generation catalysts 14a other than those used in Examples 1 and 2. The experiment conditions were such that the temperature of the nitric acid generation catalyst 14a was 200°C, and the amount of catalyst was 0.25g. As shown in FIG. 5, even in cases of using the nitric acid generation catalysts 14a other than those used in Examples 1 and 2, NOx absorption ratio can be increased compared to Comparative Example 1 (no catalyst).

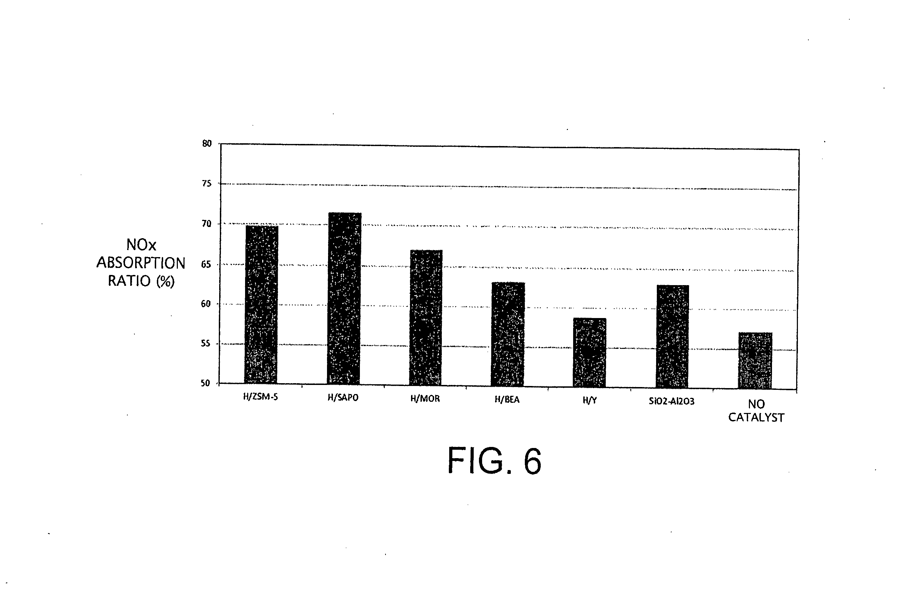

Further, for making comparisons regarding performance of catalysts that do not carry metals, FIG. 6 and Table 1 below show NOx absorption ratios measured by the gas analyzer 17 as the experimental results obtained in cases of using Example 2 (H/ZSM-5) and, as other nitric acid generation catalysts 14a, H-type zeolites H/SAPO, H/MOR, H/BEA, and H/Y, and composite oxide SiO₂-Al₂O₃. The experimental conditions were such that the temperature of the nitric acid generation catalyst 14a was 100°C, and the amount of catalyst was 0.25g. As shown in Table 1 below, H/ZSM-5 has the MFI-type zeolite structure, a pore diameter of 0.56 nm, and a heat of NH₃ adsorption of 132 kJ/mol. H/SAPO has the CHA-type zeolite structure, a pore diameter of 0.38 nm, and a heat of NH₃ adsorption of 134 kJ/mol. H/MOR has the MOR-type zeolite structure, a pore diameter of 0.65 nm, and a heat of NH₃ adsorption of 137 kJ/mol. H/BEA has the BEA-type zeolite structure, a pore diameter of 0.67 nm, and a heat of NH₃ adsorption of 123 kJ/mol. H/Y has the FAU-type zeolite structure, a pore diameter of 0.74 nm, and a heat of NH₃ adsorption of 114 kJ/mol. Further, heat of NH₃ adsorption to SiO₂-Al₂O₃ is 120 kJ/mol. As shown in FIG. 6 and Table 1 below, when an H-type zeolite of the CHA type, MFI type, BEA type, or MOR type or composite oxide SiO₂-Al₂O₃ is used as the nitric acid generation catalyst 14a, while NOx absorption ratio can be increased compared to Comparative Example 1 (no catalyst), NOx absorption ratio is varied depending on the type of catalyst used.

**TABLE 1**

| Catalyst name | Zeolite structure | Pore diameter (nm) | Heat of NH₃ adsorption (kJ/mol) | NOx absorption ratio (%) |
|---|---|---|---|---|
| H/ZSM-5 | MFI | 0.56 | 132 | 70 |
| H/SAPO | CHA | 0.38 | 134 | 72 |
| H/MOR | MOR | 0.65 | 137 | 67 |
| H/BEA | BEA | 0.67 | 123 | 63 |
| H/Y | FAU | 0.74 | 114 | 59 |
| SiO₂-Al₂O₃ | - | - | 120 | 63 |
| Comparative Example 1 (no catalyst) | - | - | - | 57 |

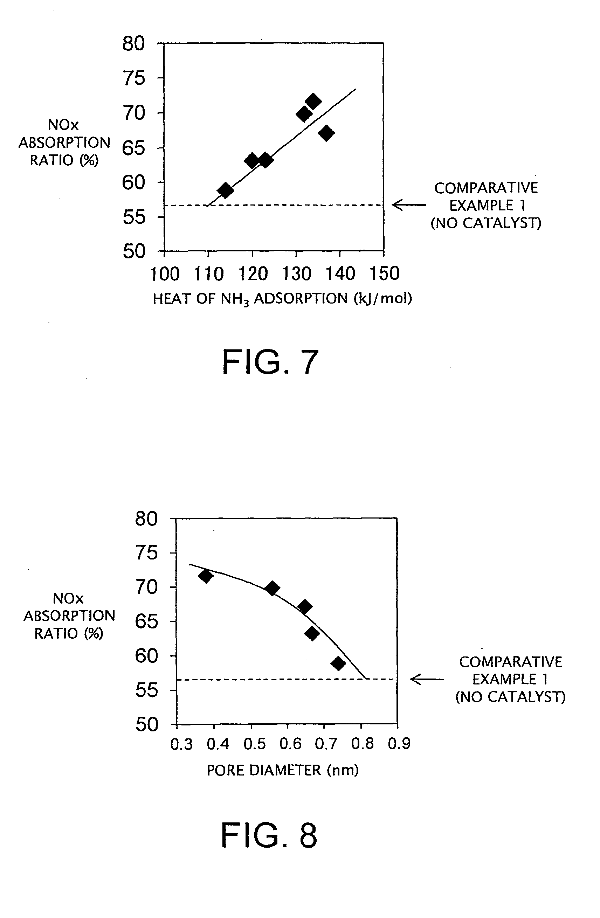

FIG. 7 shows a relationship of NOx absorption ratio with respect to heat of NH₃ adsorption. Heat of NH₃ adsorption is a parameter used for evaluating acid strength of solids, and higher heat of NH₃ adsorption denotes higher acid strength. As shown in FIG. 7, NOx absorption ratio increases with higher heat of NH₃ adsorption and higher acid strength. With the heat of NH₃ adsorption of 110 kJ/mol or higher, NOx absorption ratio becomes higher than that of Comparative Example 1 (no catalyst). Accordingly, the nitric acid generation catalyst 14a preferably contains a zeolite or oxide with an acidic site having a heat of NH₃ adsorption of 110 kJ/mol or higher. By using the nitric acid generation catalyst 14a with an acidic site having a heat of NH₃ adsorption of 114 kJ/mol or higher, NOx absorption ratio of 59% or higher can be achieved. Further, when the nitric acid generation catalyst 14a is a zeolite of the MFI type, CHA type, or MOR type having a heat of NH₃ adsorption of 132 kJ/mol or higher, NOx absorption ratio of 67% or higher can be achieved.

FIG. 8 shows a relationship of NOx absorption ratio with respect to zeolite pore diameter. As shown in FIG. 8, NOx absorption ratio increases with smaller zeolite pore diameter. With the pore diameter of 0.8 nm or smaller, NOx absorption ratio becomes higher than that of Comparative Example 1 (no catalyst). Accordingly, the nitric acid generation catalyst 14a preferably contains a zeolite with pores having a diameter of 0.8 nm or smaller, and preferably contains a zeolite with pores having a diameter in a range from 0.3 to 0.8 nm, for example. By using a zeolite with pores having a diameter of 0.74 nm or smaller as the nitric acid generation catalyst 14a, NOx absorption ratio of 59% or higher can be achieved. Further, when the nitric acid generation catalyst 14a is a CHA-type zeolite with pores having a diameter of 0.38 nm, NOx absorption ratio of 72% can be achieved.

The nitric acid generation catalyst 14a may further contain at least one metal or metal ion of silver (Ag), iron (Fe), or copper (Cu). High NOx absorption ratio can be attained also in such cases.

Nitrogen oxides in the exhaust gas from the internal combustion engine 10 are normally present in the form of NO and NO₂. In cases of eliminating such nitrogen oxides by absorbing into an absorption liquid such as water, high elimination ratio cannot be achieved, because the absorption rate is low. In contrast, according to the present embodiment, by converting nitrogen oxides in the exhaust gas into nitric acid before absorbing into the absorption liquid, the absorption rate is greatly enhanced, such that high elimination ratio can be attained even when the absorption device 15 is small-sized. Regarding conversion of nitrogen oxides into nitric acid, although nitric acid can be generated by allowing nitrogen oxides to coexist with water and ozone, simple coexistence results in low reaction rate, with the result that high absorption ratio cannot be achieved. In contrast, according to the present embodiment, by causing nitrogen oxides to contact ozone and water on the nitric acid generation catalyst 14a having an acidic site, nitric acid can be generated continuously at a high reaction rate on the nitric acid generation catalyst 14a, so that high absorption ratio can be attained even when the reformer device 14 is small-sized. For example, for a gas amount of 6000 L/h, approximately 10 g nitric acid generation catalyst 14a is sufficient, without requiring consideration of pressure loss. Further, by maintaining the temperature of the nitric acid generation catalyst 14a at 350°C or lower, it is possible to suppress ozone decomposition and reverse reaction of nitric acid reconverting into nitrogen oxides, so that the high absorption ratio can be maintained. Accordingly, in the present embodiment, high ratio of nitrogen oxide elimination can be attained even when the reformer device 14 and the absorption device 15 are small-sized. Furthermore, in the present embodiment, by maintaining the temperature of the nitric acid generation catalyst 14a at 300°C or lower, it is possible to further suppress ozone decomposition and reverse reaction of nitric acid reconverting into nitrogen oxides, so that the ratio of nitrogen oxide elimination can be further enhanced. Moreover, according to the present embodiment, by means of the feature that the nitric acid generation catalyst 14a has a heat of NH₃ adsorption of 110 kJ/mol or higher, or by means of the feature that the nitric acid generation catalyst 14a has a zeolite structure with pores having a diameter of 0.8 nm or smaller, the ratio of nitrogen oxide elimination can be further enhanced.

In order to convert NOx into HNO₃, it is necessary to add O₃ in an amount based on the following reaction formulas. Specifically, ratio O₃/NO = 1.5 is derived from the following formula (3), and ratio O₃/NO₂ = 0.5 is derived from the following formula (4). As such, it is necessary to add O₃ at a concentration that is 1.5 or more times that of NO, and 0.5 or more times that of NO₂.

NO + O₃ → NO₂ + O₂ ... (1)

3NO₂ + H₂O → 2HNO₃ + NO (2)

From (1)x3 + (2): 2NO + 3O₃ + H₂O → 2HNO₃ + 3O₂ (3)

From (1) + (2): 2NO₂ + O₃ + H₂O → 2HNO₃ + O₂ (4)

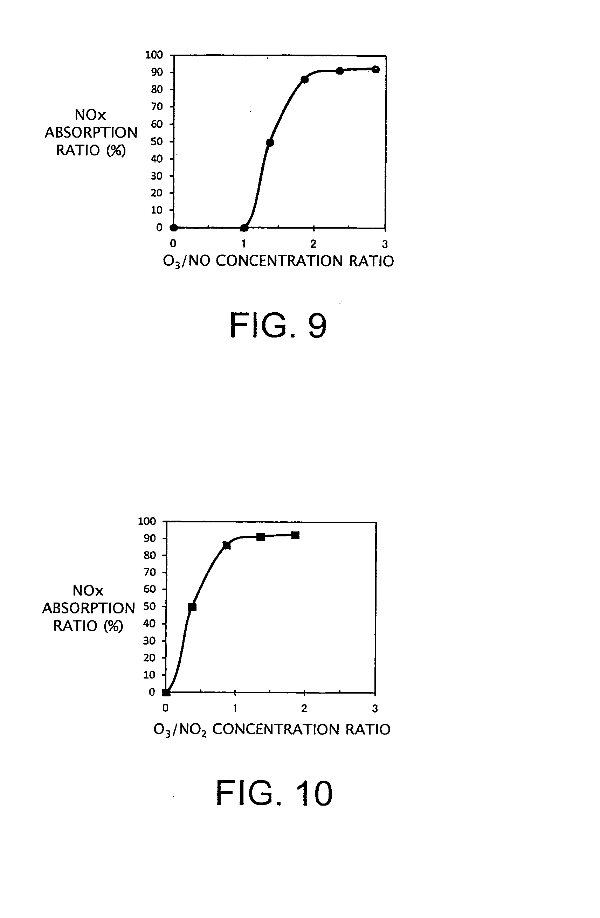

Experiment results obtained by determining NOx absorption ratios while altering O₃ concentration in the experimental apparatus of FIG. 2 are shown in FIGs. 9 and 10. FIG. 9 shows a relationship of NOx absorption ratio with respect to O₃/NO concentration ratio at the inlet of the reformer device 14. FIG. 10 shows a relationship of NOx absorption ratio with respect to O₃/NO₂ concentration ratio at the inlet of the reformer device 14. As can be understood from the experiment results in FIGs. 9 and 10, NOx absorption capability is manifested when O₃/NO concentration ratio ≥ 1.5 and O₃/NO₂ concentration ratio ≥ 0.5 hold true.

When unsaturated hydrocarbons (olefins), such as propylene (C₃H₆) and ethylene (C₂H₄), and aromatic hydrocarbons coexist with NOx as coexistent gases, since reactivity of these hydrocarbons with O₃ is high, O₃ is undesirably consumed by reactions with these hydrocarbons, and the amount of O₃ used for HNO₃ generation becomes reduced. This results in a decrease in NOx absorption ratio. For example, C₃H₆ reacts with O₃ according to the following reaction formulas and thereby consumes O₃.

C₃H₆ + O₃ → HCHO + CH₃CHO

HCHO + O₃ → HCOOH + O₂

CH₃CHO + O₃ →CH₃COOH + O₂

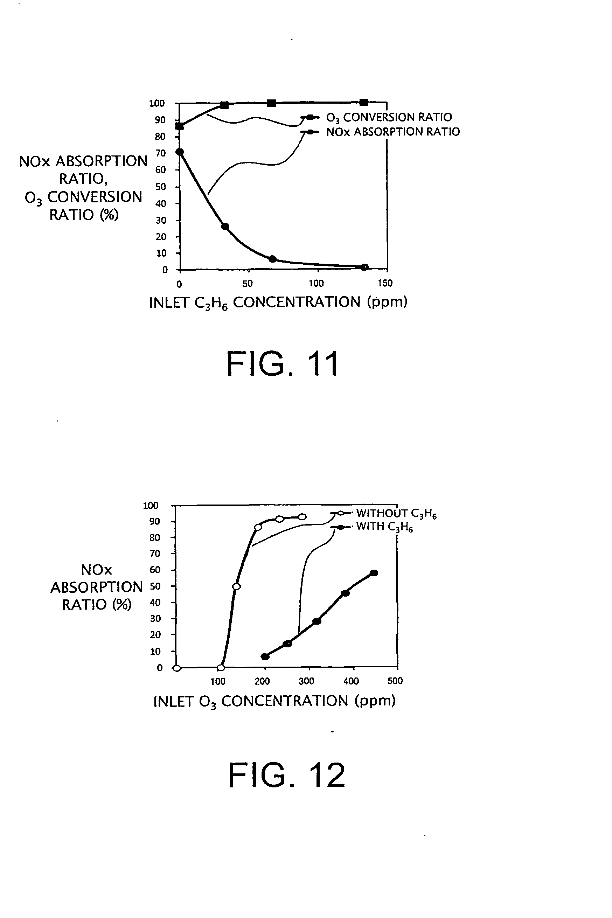

FIGs. 11 and 12 show experiment results obtained by determining NOx absorption ratios and O₃ conversion ratios in the experimental apparatus of FIG. 2 while altering the concentration of C₃H₆ coexistent with NOx at the inlet of the reformer device 14. FIG. 11 shows relationships of NOx absorption ratio and O₃ conversion ratio with respect to C₃H₆ concentration at the inlet of the reformer device 14. FIG. 12 shows a relationship of NOx absorption ratio with respect to O₃ concentration at the inlet of the reformer device 14. As can be understood from the experiment results in FIGs. 11 and 12, NOx absorption ratio decreases as the concentration of coexistent C₃H₆ increases. Although the decrease in NOx absorption ratio can be suppressed by increasing the amount of added ozone, since an increase in the amount of ozone addition leads to an increase in ozone generation energy, it is preferable to suppress the decrease in NOx absorption ratio without increasing the amount of ozone addition.

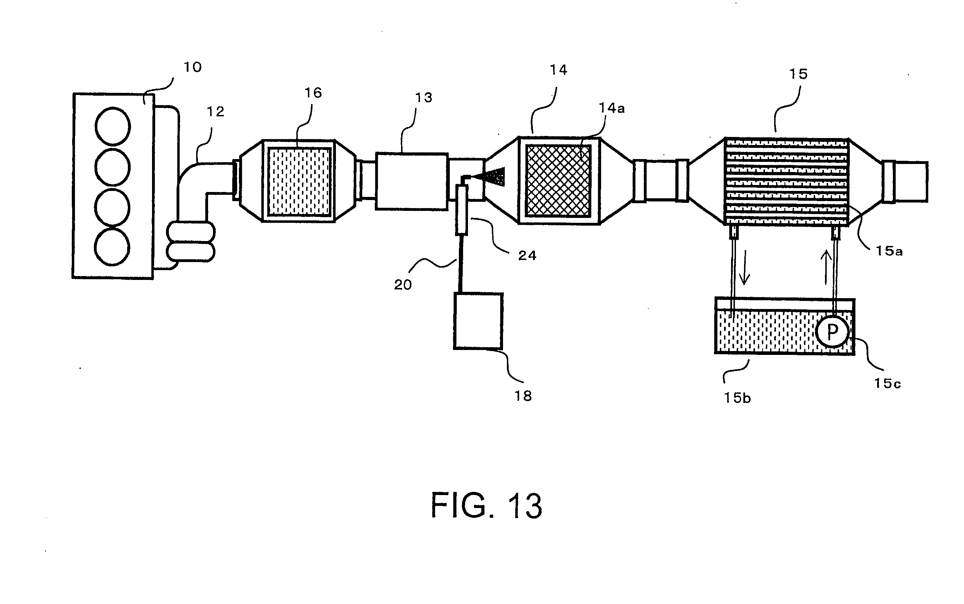

In light of the above, the configuration example shown in FIG. 13 includes, in contrast to the configuration example shown in FIG. 1, an oxidation catalyst 16 provided at a position upstream of the reformer device 14 and the heat exchanger 13 in the exhaust manifold 12. The oxidation catalyst 16 serves to oxidize hydrocarbons (THC) (particularly, unsaturated hydrocarbons (olefins) such as propylene (C₃H₆) and ethylene (C₂H₄), and aromatic hydrocarbons) contained in the exhaust gas of the internal combustion engine 10 into water (H₂O) and carbon dioxide (CO₂), and also serves to oxidize carbon monoxide (CO) contained in the exhaust gas into carbon dioxide (CO₂). Further, the oxidation catalyst 16 serves to oxidize nitrogen monoxide (NO) contained in the exhaust gas of the internal combustion engine 10 into nitrogen dioxide (NO₂).

According to the configuration example shown in FIG. 13, as unsaturated hydrocarbons and aromatic hydrocarbons contained in the exhaust gas are removed by being oxidized on the oxidation catalyst 16 located upstream of the reformer device 14, consumption of O₃ due to reactions with these hydrocarbons can be suppressed, so that reduction in the amount of O₃ used for HNO₃ generation in the reformer device 14 can be prevented. In addition, because NO contained in the exhaust gas is oxidized into NO₂ on the oxidation catalyst 16 located upstream of the reformer device 14, reduction in the amount of O₃ used for HNO₃ generation in the reformer device 14 can be further prevented. Accordingly, decrease in NOx absorption ratio can be suppressed without increasing the amount of ozone addition.

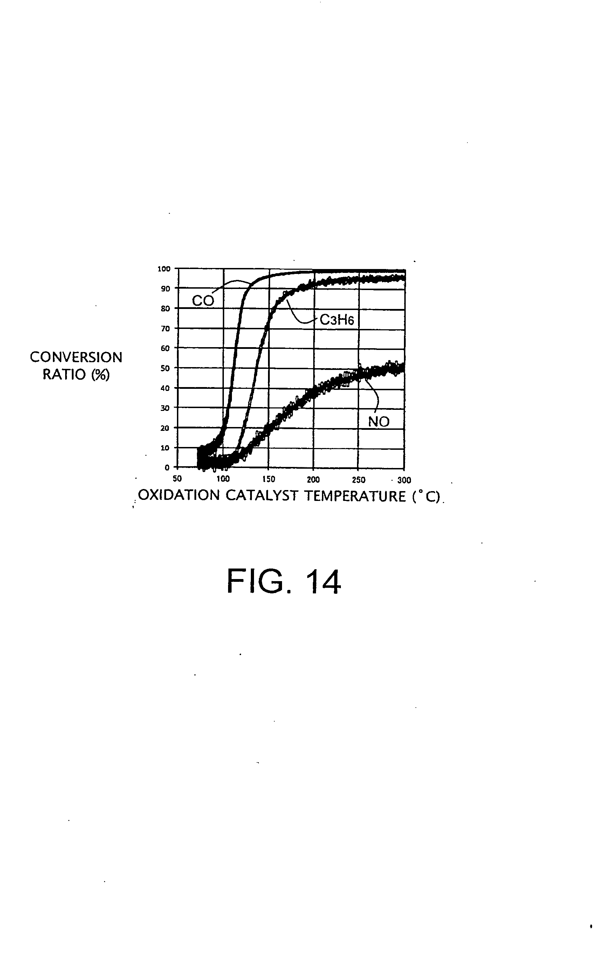

FIG. 14 shows temperature dependence of the conversion ratio of C₃H₆ and CO into CO₂ and the conversion ratio of NO into NO₂ on the oxidation catalyst 16. As can be seen in FIG. 14, by maintaining the temperature of the oxidation catalyst 16 at 200°C or higher, 90% or more of C₃H₆ can be converted into CO₂. Further, by maintaining the temperature of the oxidation catalyst 16 at 200°C or higher, 40% or more of NO can be converted into NO₂.

While the embodiments for practicing the present invention are described as above, the present invention is not limited to these embodiments. It is naturally possible to practice the present invention in various forms without deviating from the essence of the present invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An exhaust emission purification apparatus for internal combustion engine (10), which serves to eliminate nitrogen oxide from within an exhaust gas of the internal combustion engine (10), comprising:
a reformer device (14) that includes a nitric acid generating catalyst (14a) for promoting a reaction to convert nitrogen oxide into nitric acid, and causes nitrogen oxide contained in the exhaust gas from the internal combustion engine (10) to be reformed into nitric acid on the nitric acid generating catalyst (14a);
an absorption device (15) that causes the nitric acid obtained by the reformation in the reformer device (14) to be absorbed into an absorption liquid and thereby separates and removes the nitric acid; and
a temperature adjustment device (13) for maintaining a temperature of the nitric acid generating catalyst (14a) at 350°C or lower.

2. The exhaust emission purification apparatus for internal combustion engine (10) according to claim 1, wherein
the temperature adjustment device (13) is a device for maintaining the temperature of the nitric acid generating catalyst (14a) at 300°C or lower.

3. The exhaust emission purification apparatus for internal combustion engine (10) according to claim 1 or 2, wherein
an oxidation catalyzing device is provided at a position upstream of the reformer device (14), the oxidation catalyzing device causing nitrogen monoxide contained in the exhaust gas from the internal combustion engine (10) to be oxidized into nitrogen dioxide, and causing hydrocarbon contained in the exhaust gas to be oxidized into water and carbon dioxide.

4. The exhaust emission purification apparatus for internal combustion engine (10) according to any one of claims 1 to 3, wherein
the nitric acid generating catalyst (14a) contains a zeolite or oxide.

5. The exhaust emission purification apparatus for internal combustion engine (10) according to claim 4, wherein
the nitric acid generating catalyst (14a) contains a zeolite or oxide with an acidic site having a heat of ammonia adsorption of 110 kJ/mol or higher.

6. The exhaust emission purification apparatus for internal combustion engine (10) according to claim 4 or 5, wherein
the nitric acid generating catalyst (14a) contains a zeolite with pores having a diameter of 0.8 nm or smaller.

7. The exhaust emission purification apparatus for internal combustion engine (10) according to any one of claims 4 to 6, wherein
the nitric acid generating catalyst (14a) contains a CHA-type, MFI-type, BEA-type, or MOR-type zeolite.

8. The exhaust emission purification apparatus for internal combustion engine (10) according to any one of claims 4 to 7, wherein
the nitric acid generating catalyst (14a) contains a metal or metal ion of at least one of Ag, Fe, and Cu.

9. The exhaust emission purification apparatus for internal combustion engine (10) according to any one of claims 1 to 8, wherein
the reformer device (14) reforms nitrogen oxide contained in the exhaust gas into nitric acid by adding an oxidant to the exhaust gas from the internal combustion engine (10).

10. The exhaust emission purification apparatus for internal combustion engine (10) according to claim 9, wherein
the oxidant is ozone.

11. The exhaust emission purification apparatus for internal combustion engine (10) according to any one of claims 1 to 10, wherein
the absorption device (15) includes a gas-liquid contact device (15a) that causes the nitric acid obtained by the reformation in the reformer device (14) to come into contact with and be absorbed into the absorption liquid via a porous membrane.

## Patentansprüche

1. Abgasemissionsreinigungsvorrichtung für einen Verbrennungsmotor (10), die zur Entfernung von Stickstoffoxid aus einem Abgas des Verbrennungsmotors (10) dient, umfassend:
eine Reformiervorrichtung (14), die einen Salpetersäure-erzeugenden Katalysator (14a) zum Fördern einer Reaktion zur Umwandlung von Stickstoffoxid in Salpetersäure umfasst und bewirkt, dass Stickstoffoxid, das in dem Abgas von dem Verbrennungsmotor (10) enthalten ist, an dem Salpetersäure-erzeugenden Katalysator (14a) zu Salpetersäure reformiert wird,
eine Absorptionsvorrichtung (15), die bewirkt, dass die Salpetersäure, die durch das Reformieren in der Reformiervorrichtung (14) erhalten worden ist, in einer Absorptionsflüssigkeit absorbiert wird und dadurch die Salpetersäure abtrennt und entfernt, und
eine Temperatureinstellvorrichtung (13) zum Halten einer Temperatur des Salpetersäure-erzeugenden Katalysators (14a) bei 350 °C oder niedriger.

2. Abgasemissionsreinigungsvorrichtung für einen Verbrennungsmotor (10) nach Anspruch 1, bei der die Temperatureinstellvorrichtung (13) eine Vorrichtung zum Halten der Temperatur des Salpetersäure-erzeugenden Katalysators (14a) bei 300 °C oder niedriger ist.

3. Abgasemissionsreinigungsvorrichtung für einen Verbrennungsmotor (10) nach Anspruch 1 oder 2, bei der eine Oxidationskatalysatorvorrichtung an einer Position stromaufwärts von der Reformiervorrichtung (14) bereitgestellt ist, wobei die Oxidationskatalysatorvorrichtung bewirkt, das Stickstoffmonoxid, das in dem Abgas von dem Verbrennungsmotor (10) enthalten ist, zu Stickstoffdioxid oxidiert wird, und bewirkt, dass Kohlenwasserstoff, der in dem Abgas enthalten ist, zu Wasser und Kohlendioxid oxidiert wird.

4. Abgasemissionsreinigungsvorrichtung für einen Verbrennungsmotor (10) nach einem der Ansprüche 1 bis 3, bei welcher der Salpetersäure-erzeugende Katalysator (14a) einen Zeolith oder ein Oxid enthält.

5. Abgasemissionsreinigungsvorrichtung für einen Verbrennungsmotor (10) nach Anspruch 4, bei welcher der Salpetersäure-erzeugende Katalysator (14a) einen Zeolith oder ein Oxid mit einer sauren Stelle mit einer Ammoniakadsorptionswärme von 110 kJ/mol oder höher enthält.

6. Abgasemissionsreinigungsvorrichtung für einen Verbrennungsmotor (10) nach Anspruch 4 oder 5, bei welcher der Salpetersäure-erzeugende Katalysator (14a) einen Zeolith mit Poren mit einem Durchmesser von 0,8 nm oder kleiner enthält.

7. Abgasemissionsreinigungsvorrichtung für einen Verbrennungsmotor (10) nach einem der Ansprüche 4 bis 6, bei welcher der Salpetersäure-erzeugende Katalysator (14a) einen Zeolith des CHA-Typs, des MFI-Typs, des BEA-Typs oder des MOR-Typs enthält.

8. Abgasemissionsreinigungsvorrichtung für einen Verbrennungsmotor (10) nach einem der Ansprüche 4 bis 7, bei welcher der Salpetersäure-erzeugende Katalysator (14a) ein Metall oder Metallion von mindestens einem von Ag, Fe und Cu enthält.

9. Abgasemissionsreinigungsvorrichtung für einen Verbrennungsmotor (10) nach einem der Ansprüche 1 bis 8, bei der die Reformiervorrichtung (14) Stickstoffoxid, das in dem Abgas enthalten ist, durch Zusetzen eines Oxidationsmittels zu dem Abgas von dem Verbrennungsmotor (10) zu Salpetersäure reformiert.

10. Abgasemissionsreinigungsvorrichtung für einen Verbrennungsmotor (10) nach Anspruch 9, bei der das Oxidationsmittel Ozon ist.

11. Abgasemissionsreinigungsvorrichtung für einen Verbrennungsmotor (10) nach einem der Ansprüche 1 bis 10, bei der die Absorptionsvorrichtung (15) eine Gas-Flüssigkeit-Kontaktvorrichtung (15a) umfasst, die bewirkt, dass die Salpetersäure, die durch die Reformierung in der Reformiervorrichtung (14) erhalten worden ist, mit der Absorptionsflüssigkeit über eine poröse Membran in Kontakt kommt und in der Absorptionsflüssigkeit absorbiert wird.

## Revendications

1. Appareil de purification d'émission d'échappement pour moteur à combustion interne (10), qui sert à éliminer de l'oxyde d'azote à l'intérieur d'un gaz d'échappement du moteur à combustion interne (10), comprenant :
un dispositif reformeur (14) qui inclut un catalyseur de génération d'acide nitrique (14a) pour favoriser une réaction afin de convertir l'oxyde d'azote en acide nitrique, et amène l'oxyde d'azote contenu dans le gaz d'échappement provenant du moteur à combustion interne (10) à être reformé en acide nitrique sur le catalyseur de génération d'acide nitrique (14a) ;
un dispositif d'absorption (15) qui amène l'acide nitrique obtenu par la reformation dans le dispositif reformeur (14) à être absorbé dans un liquide d'absorption et à séparer et éliminer ainsi l'acide nitrique ; et
un dispositif d'ajustement de température (13) pour maintenir une température du catalyseur de génération d'acide nitrique (14a) à 350 °C ou moins.

2. Appareil de purification d'émission d'échappement pour moteur à combustion interne (10) selon la revendication 1, dans lequel
le dispositif d'ajustement de température (13) est un dispositif pour maintenir la température du catalyseur de génération d'acide nitrique (14a) à 300 °C ou moins.

3. Appareil de purification d'émission d'échappement pour moteur à combustion interne (10) selon la revendication 1 ou 2, dans lequel
un dispositif de catalysation d'oxydation est prévu à une position en amont du dispositif reformeur (14), le dispositif de catalysation d'oxydation amenant le monoxyde d'azote contenu dans le gaz d'échappement provenant du moteur à combustion interne (10) à être oxydé en dioxyde d'azote, et amenant l'hydrocarbure contenu dans le gaz d'échappement à être oxydé en eau et dioxyde de carbone.

4. Appareil de purification d'émission d'échappement pour moteur à combustion interne (10) selon l'une quelconque des revendications 1 à 3, dans lequel
le catalyseur de génération d'acide nitrique (14a) contient une zéolite ou un oxyde.

5. Appareil de purification d'émission d'échappement pour moteur à combustion interne (10) selon la revendication 4, dans lequel
le catalyseur de génération d'acide nitrique (14a) contient une zéolite ou un oxyde avec un site acide ayant une chaleur d'adsorption d'ammoniac de 110 kJ/mol ou plus.

6. Appareil de purification d'émission d'échappement pour moteur à combustion interne (10) selon la revendication 4 ou 5, dans lequel
le catalyseur de génération d'acide nitrique (14a) contient une zéolite avec des pores ayant un diamètre de 0,8 nm ou moins.

7. Appareil de purification d'émission d'échappement pour moteur à combustion interne (10) selon l'une quelconque des revendications 4 à 6, dans lequel
le catalyseur de génération d'acide nitrique (14a) contient une zéolite de type CHA, de type MFI, de type BEA ou de type MOR.

8. Appareil de purification d'émission d'échappement pour moteur à combustion interne (10) selon l'une quelconque des revendications 4 à 7, dans lequel
le catalyseur de génération d'acide nitrique (14a) contient un métal ou un ion métallique d'au moins un parmi Ag, Fe et Cu.

9. Appareil de purification d'émission d'échappement pour moteur à combustion interne (10) selon l'une quelconque des revendications 1 à 8, dans lequel
le dispositif reformeur (14) reforme l'oxyde d'azote contenu dans le gaz d'échapppement en acide nitrique en ajoutant un oxydant au gaz d'échappement provenant du moteur à combustion interne (10).

10. Appareil de purification d'émission d'échappement pour moteur à combustion interne (10) selon la revendication 9, dans lequel
l'oxydant est de l'ozone.

11. Appareil de purification d'émission d'échappement pour moteur à combustion interne (10) selon l'une quelconque des revendications 1 à 10, dans lequel
le dispositif d'absorption (15) inclut un dispositif de contact gaz-liquide (15a) qui amène l'acide nitrique obtenu par la reformation dans le dispositif reformeur (14) à venir en contact avec le liquide d"absorption et à être absorbé dans celui-ci via une membrane poreuse.
